# EUROPEAN PATENT SPECIFICATION

(11) **EP 4 108 601 B1**
(45) Date of publication and mention of the grant of the patent: **12.03.2025**
(21) Application number: 21382563.1
(22) Date of filing: 25.06.2021
(51) Int. Cl.: B65G 21/00, B65B 57/00, B65G 43/02, F16P 1/00

(54) **PACKAGING MACHINE WITH PROTECTIVE GUARD**
VERPACKUNGSMASCHINE MIT SCHUTZVORRICHTUNG
MACHINE D'EMBALLAGE DOTÉE D'UNE PROTECTION

(43) Date of publication of application: 28.12.2022
(73) Proprietor: MULTIVAC Sepp Haggenmüller SE & Co. KG, 87787 Wolfertschwenden (DE)
(72) Inventor: ICKERT, Lars, 87437 Kempten (DE); SILVA, Arturo, 08019 Barcelona (ES)
(74) Representative: Grünecker Patent- und Rechtsanwälte PartG mbB

(56) References cited:
- EP-A1- 0 424 226
- EP-A1- 2 907 422
- WO-A1-2015/198274
- FR-A1- 2 655 628
- IT-A1- UB20 155 300
- US-A1- 2007 023 257

## Description

The invention relates to packaging machines. In particular, the invention relates to operational safety of packaging machines.

It is known from practice to provide removable safety covers at packaging machines to prevent injury of operators or service personnel due to moving machine parts.

EP 2 907 422 A1 describes a checkout counter for a shop having a conveyor belt. A cover provides surface continuity between an upper surface of the conveyor belt and a fixed plane of a cashing device. The cover is fixed by fixing means configured to give way under the effect of jamming of an object driven by the conveyor belt. Detection of cover separation may cause the conveyor belt to stop running.

EP 0 424 226 A1 discloses a packaging machine for closing packging trays after filling in a filling station. Mechanical means for displacing the trays into the filling station comprise an endless conveyor having an upper run with a series of spaced pushers thereupon.

DE 10 2019 214 962 A1 describes a thermoforming packaging machine with a forming station for forming depressions for the products to be packaged in a film web. Directly downstream of the forming station, a protective cover is provided to prevent a user from reaching into a protected space below the protective cover. The protective cover is a metal sheet part supported at a cover of the forming station with a pivotable connection. The pivotable connection allows the protective cover to pivot around a horizontal pivot axis extending perpendicular to the transport direction of the packaging machine. The protective cover may be opened by pivoting the protective cover about the pivot axis to allow access to the protected space. A sensor is provided to detect whether the protective cover is in its closed position. If the protective cover is not in its closed position, operation of the packaging machine is interrupted.

IT UB20 155 300 A1 discloses a packaging machine according to the preamble of claim 1, and a method according to the preamble of claim 13.

It is an object of the present invention to provide an improved way of ensuring safe operation of a packaging machine.

This object is achieved by the subject matter of claim 1 or the subject matter of claim 13, respectively. The dependent claims indicate advantageous embodiments of the invention.

According to an aspect of the invention, a packaging machine is provided. The packaging machine comprises a controller and a conveyor assembly. The conveyor assembly is configured to convey packages along a production direction. The conveyor assembly comprises an endless circulation device. The endless circulation device is configured to be redirected about a return axis. The packaging machine further comprises a first protective guard. The first protective guard is movably provided in a first protection position. The first protective guard is curved around the return axis.

By being curved around the return axis, the first protective guard provides protection against a user reaching towards the return axis, which may lead to injury due to moving parts of the conveyor assembly, for example. Due to its curvature, the first protective guard may prevent a user from reaching towards the return axis from an increased angular range. Further, a dimension of the first protective guard along the production direction may be reduced as compared to systems having non-curved protective guard, while maintaining at least the same level of protection.

As the first protective guard is movably provided in the first protection position, the first protective guard may be moved out of the first protection positon, in particular to allow access to the return axis or the conveyor assembly, for example for maintenance purposes. Due to being movably provided in the first protection position, the first protective guard may move out of the first protection position, if the first protective guard is engaged by a hand of the user or by another object. This may prevent the hand of the user or the other object from being caught between the first protective guard and further parts of the packaging machine, such as parts of the conveyor assembly, for example. In particular, if a hand of a user or another object is pushed or pulled into the first protective guard by the conveyor assembly, the first protective guard may move along to prevent the hand or the other object from being caught and damaged between the first protective guard and the conveyor assembly.

The first protective guard may be movable between the first protection position and a first open position. The first protective guard may be curved around the return axis at least in the first protection position. The first protective guard may be curved around the return axis in the first protection position and in the first open position.

If an object is caught between the conveyor assembly and the first protective guard, the force provided due to operation of the conveyor assembly may be sufficient to move the first protective guard out of the first protection position.

The packaging machine may optionally comprise restoration element configured to automatically return the first protective guard into the first protection position. The restoration element may preload the first protective guard into the first protection position. The restoration element may, for example, comprise a spring.

The first protective guard is configured to be rotated. The first protective guard may be configured rotated out of the first protection position. The first protective guard may be configured to be rotated between the first protection position and the first open position. The first protective guard may be configured to be moved by rotational movement, but not by translational movement. The first protective guard may be configured to be moved by rotational movement and by translational movement. Rotating the first protective guard may take up less space along the production direction than moving the first protective guard (purely) by translational movement.

The first protective guard is configured to be rotated about the return axis, in particular out of the first protection position or between the first protection position and the first open position. Movement of the first protective guard by rotation about the return axis may only require a limited amount of space around the return axis.

The first protective guard may be fixed to the packaging machine, in particular to a machine frame of the packaging machine. The first protective guard may not be removable from the packaging machine without tools. This may reduce the likelihood of manipulation of the packaging machine by removal of safety features.

The first protective guard may extend in parallel to the return axis.

The first protective guard may extend coaxially with the return axis. The first protective guard and the return axis may be concentric.

The first protective guard may cover an angle of at least 90 degrees, or at least 100 degrees, or at least 120 degrees, or at least 150 degrees, or at least 180 degrees around the return axis. By covering a significant angle around the return axis, the region around the return axis may be effectively protected. The first protective guard may cover an angle of no more than 270 degrees, or no more than 210 degrees, or no more than 180 degrees, or no more than 150 degrees, or no more than 90 degrees around the return axis. Limiting the angle covered by the protective guard may reduce the likelihood of interference of the first protective guard with operation of the conveyor assembly.

A lateral direction of the packaging machine may be a horizontal direction perpendicular to the production direction.

A main extension direction of the first protective guard may be parallel to the lateral direction. The first protective guard may extend along the lateral direction by at least 20 cm, or at least 30 cm, or at least 40 cm, or at least 50 cm, or at least 60 cm, or at least 80 cm, or at least 100 cm, or at least 120 cm.

The first protective guard may comprise a concave surface facing the return axis. The concave surface may be a continuously curved surface. Alternatively, the concave surface may be provided by multiple plane sub-surfaces that are arranged at an angle with respect to each other. A cross-section of the first protective guard in a sectional plane perpendicular to the lateral direction of the packaging machine may be the same for each position along the lateral direction.

The endless circulation device may comprise a first chain and a second chain. The first chain may be configured to circulate on a first lateral side of the packaging machine. The second chain may be configured to circulate on a second lateral side of the packaging machine. The first chain and the second chain may be redirected about the return axis. The first chain and the second chain may be driven by a drive unit of the conveyor assembly. The first chain and the second chain may circulate in a synchronized manner. The first chain and the second chain may circulate to convey the packages along the production direction.

The first chain and the second chain may comprise clamping elements. The clamping elements may be configured to grip a film web for conveying the film web along the production direction. The film web may be a lower film web of a thermoforming packaging machine.

The endless circulation device may comprise a plurality of lateral rods. Each lateral rod may comprise a first end fixed to the first chain and a second end fixed to the second chain. The lateral rods may be configured to be moved by synchronous circulation of the first chain and the second chain. The lateral rods may be configured to convey packages, in particular trays, along the production direction.

The packaging machine comprises a first sensor. The first sensor is configured to detect when the first protective guard moves out of the first protection position. The controller is configured to prevent operation of the conveyor assembly in response to a detection of the first protective guard moving out of the first protection position. For example, operation of the conveyor assembly may be prevented, when the first protective guard is moved out of the first protection position by an object that is caught between the first protective guard and the conveyor assembly, thus preventing damage to the object and/or the packaging machine. Operation of the conveyor assembly may be prevented when the first protective guard is not in the first protection position due to being removed from the packaging machine or due to malfunction, thus preventing operation of the conveyor assembly under unsafe conditions. The controller may also prevent operation of other parts of the packaging machine in response to a detection of the first protective guard moving out of the first protection position. The controller may, for example, be configured to prevent operation of the packaging machine in its entirety in response to a detection of the first protective guard moving out of the first protection position.

The packaging machine may further comprise a second protective guard. The second protective guard may be movably provided in a second protection position.

The second protective guard may be configured to be moved by both a translational movement and a rotational movement. Being movable by both a translational movement and a rotational movement may allow the second protective guard to move in response to objects being caught at different positions in the packaging machine. The different modes of movement that are possible for the second protective guard may allow the second protective guard to effectively move to prevent an object being caught between the second protective guard and another part of the packaging machine, in particular a moving part of the packaging machine, such as the conveyor assembly.

The second protective guard may be configured to be moved by a translational movement and a rotational movement at the same time.

The translational part of a movement of the second protective guard out of the second protection position may be a translational movement having a downward component, in particular a vertical downward component.

The rotational part of a movement of the second protective guard out of the second protection position may comprise a rotation about an axis extending in a lateral direction of the packaging machine.

The packaging machine may further comprise a holding assembly. The holding assembly may be configured to apply a holding force to the second protective guard. The holding force may be sufficient to hold the second protective guard in the second protection position during normal operation of the packaging machine. The holding force may be small enough to allow the second protective guard to be manually moved out of the second protection position. When an object has been caught between the second protective guard and another part of the packaging machine, in particular a movable part of the packaging machine, such as a conveyor assembly, the second protective guard may, against the force applied by the holding assembly, be moved out of the second protection position.

The packaging machine may further comprise a second sensor. The second sensor may be configured to detect when the second protective guard moves out of the second protection position. The controller may be configured to prevent operation of the conveyor assembly in response to a detection of the second protective guard moving out of the second protection position. The controller may be configured to prevent operation of further parts of the packaging machine, or of the packaging in its entirety, in response a detection of the second protective guard moving out of the second protection position.

The second protective guard may be provided at an infeed end or at an outfeed end of the conveyor assembly.

The second protective guard may be provided upstream of the return axis, or downstream of the return axis with respect to the production direction. A distance between the return axis and the second protective guard may be less than 10 cm, or less than 5 cm, or less than 3 cm, or less than 2 cm. The second protective guard may, in the second protection position, cover the return axis with respect to a horizontal direction along or against the production direction.

The second protective guard may extend essentially vertically in the second protection position.

The second protective guard may have a main extension direction parallel to the lateral direction.

The second protective guard may be movably supported by engagement of a support pin in a slot to enable the translational movement and the rotational movement of the second protective guard. In particular, the second protective guard may be movably supported by engagement of a first support pin in a first slot at a first lateral side of the packaging machine, and by engagement of a second support pin in a second slot at a second lateral side of the packaging machine. When the second protective guard is in the second protection position, the support pin (or the first support pin and the second support pin, respectively) may be provided in an upper position in the slot (or in the first slot or the second slot, respectively). When the second protective guard moves out of the second protection position, a position of the support pin (or the first support pin and the second support pin) may change to a downward position in the slot (or in the first slot and the second slot, respectively). This may happen by movement of the pin, or by movement of the slot.

The support pin may be provided at the second protective guard and the slot may be fixed with respect to a machine frame of the packaging machine. Alternatively, the slot may be provided at the second protective guard and the support pin may be fixed with respect to a machine frame of the packaging machine.

The packaging machine may comprise a sealing station for sealing packages. The conveyor assembly may be configured to convey the packages for sealing to the sealing station, or may be configured to convey sealed packages away from the sealing station. The conveyor assembly may be configured to convey the packages further downstream of the sealing station, or further upstream of the sealing station.

The packaging machine may be a thermoforming packaging machine. The packaging machine may be a tray sealer.

The packages conveyed by the conveyor assembly may be unsealed packages or sealed packages. The packages conveyed by the conveyor assembly may be incomplete. The packages conveyed by the conveyor assembly may be parts that will be, at a more downstream position of the packaging machine, reformed or otherwise treated and/or combined with other parts to form the final packages. The packages conveyed by the conveyor assembly may comprise unsealed trays or sealed trays. The packages conveyed by the conveyor assembly may be a lower film web of a thermoforming packaging machine.

According to a further aspect, the invention provides a method for operating a packaging machine. The method comprises conveying packages along a production direction with a conveyor assembly comprising an endless circulation device that is redirected about a return axis. Access to a protection region of the conveyor assembly is protected with a first protective guard, while the first protective guard is in a first protection position. The first protective guard is rotated out of the first protection position about the return axis. A rotation of the first protective guard out of the first protection position is detected with a first sensor. Operation of the conveyor assembly is prevented in response to the detection of the rotation of the first protective guard out of the first protection position.

By rotating out of the first protection position about the return axis, the first protective guard may move out of the way to avoid pinching of an object, such as a hand of a user that has been caught between the first protective guard and a part of the packaging machine, such as the conveyor assembly. The first protective guard may be rotated about the return axis by an object, such as a hand of a user that has been caught between the first protective guard and a movable part of the packaging machine.

The first protective guard may be rotated out of the first protection position about the return axis manually by a user to facilitate access to the return axis, for example for maintenance purposes.

The rotating motion of the first protective guard may be implemented in a space efficient manner.

The first protective guard may correspond to the first protective guard of the packaging machine according to the aspect previously described.

The first protective guard may be curved around the return axis.

The conveyor assembly may alternatingly move in a forward sense and a rearward sense. When moving in the forward sense, the conveyor assembly may convey packages along the production direction. When moving in the rearward sense, the conveyor assembly may disengage the packages.

The conveyor assembly may correspond to the conveyor assembly of the packaging machine according to the aspect previously described. For example, the conveyor assembly may comprise a plurality of lateral rods that push the packages along the production direction, when the conveyor assembly moves in a forward sense. The conveyor assembly may push packages into a sealing position inside a sealing station of the packaging machine via the lateral rods. Once the packages are in the sealing position, the lateral rods may be withdrawn by a movement of the conveyor assembly in a rearward sense to avoid that the lateral rods are in the way of the sealing process.

Access to the protection region of the conveyor assembly may be protected with a second protective guard, while the second protective guard is in a second protection position. The second protective guard may be moved out of the second protection position by a combination of a rotational movement and a translational movement. A movement of the second protective guard out of the second protection position may be detected with a second sensor. Operation of the conveyor assembly may be prevented in response to a detection of the movement of the second protective guard out of the second protection position.

The second protective guard may correspond to the second protective guard of the packaging machine according to the aspect previously described.

Features, explanations and advantages described in the context of the packaging machine or the method for operating the packaging machine may be combined with or transferred to the other one of the packaging machine and the method for operating the packaging machine. In particular, the packaging machine may be suitable for, designed for, and/or configured for carrying out the method. The method may be carried out using the packaging machine.

In the following, embodiments are described with reference to the figures, whereby
Fig. 1 shows a schematic perspective view of a packaging machine according to an embodiment;
Fig. 2 shows a schematic cut perspective view of an infeed conveyor section of the packaging machine with the second protective guard in the second protection position;
Fig. 3 shows a schematic cut perspective view of the infeed conveyor section of the packaging machine with the second protective guard in the second open position;
Fig. 4 shows a schematic perspective view of the second protective guard and corresponding holding brackets of the packaging machine according to the embodiment;
Fig. 5 shows a schematic side view of the second protective guard in the second protection position;
Fig. 6 shows a schematic side view of the second protective guard in the second open position; and
Fig. 7 shows a schematic perspective view of the second protective guard seen from the side of the infeed conveyor.

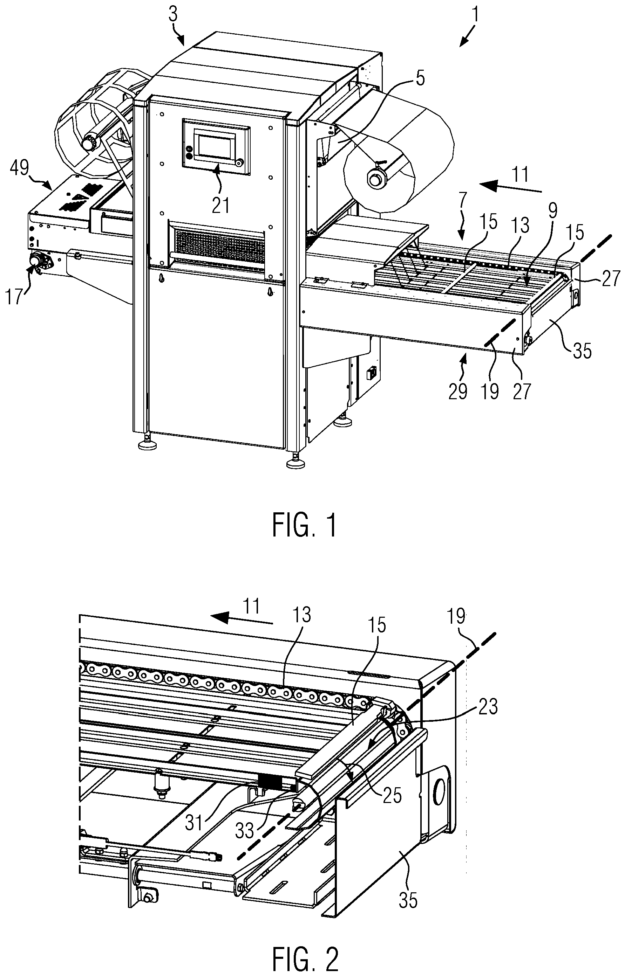

Fig. 1 illustrates a packaging machine 1 according to an embodiment. The illustrated packaging machine 1 is of a type known as tray sealer. However, the invention could also be applied to packaging machines of other types, such as a thermoforming packaging machine, for example.

In the illustrated embodiment, the packaging machine 1 comprises a sealing station 3 for closing trays (packages) by sealing a top film 5 to the trays along a sealing seam surrounding an opening of the tray.

The packaging machine 1 comprises an infeed section 7 with a conveyor assembly 9 for conveying the trays along a production direction 11 towards the sealing station 3 or into the sealing station 3. On the way to the sealing station 3, products may be inserted into the trays, for example while the trays are conveyed along the production direction 11 by the conveyor assembly 9.

The conveyor assembly 9 comprises an endless circulation device for transporting the trays. The endless circulation device comprises first and second chains 13 circulating at opposing lateral sides of the packaging machine 1. Lateral rods 15 extend between the first and second chains 13 in parallel to a lateral direction, which is a horizontal direction perpendicular to the production direction 11. The conveyor assembly 9 further comprises a drive unit 17 (see Fig. 2) driving the first and second chains 13 in a synchronous manner. The first and second chains 13 and the lateral rods 15 are redirected about a return axis 19 during operation of the conveyor assembly 9. The return axis 19 extends in parallel to the lateral direction. In the illustrated embodiment, the return axis 19 is provided at an upstream end of the conveyor assembly 9.

The packaging machine 1 comprises a controller 21. The controller 21 is configured to control operation of the sealing station 3 and operation of the conveyor assembly 9. In particular, the controller 21 controls the conveyor assembly 9 to intermittently convey the trays along the production direction 11. In a work cycle, the conveyor assembly 9 first moves in a forward sense (by circulating anti-clockwise in Fig. 1) to push trays into the sealing station 3 by engagement with the lateral rods 15. Once the trays are in place in the sealing station 3, the conveyor assembly 9 circulates in a rearward sense (clockwise in Fig. 1) to withdraw any laterals rod 15 from the sealing station 3. Subsequently, the sealing station 3 operates to seal the trays.

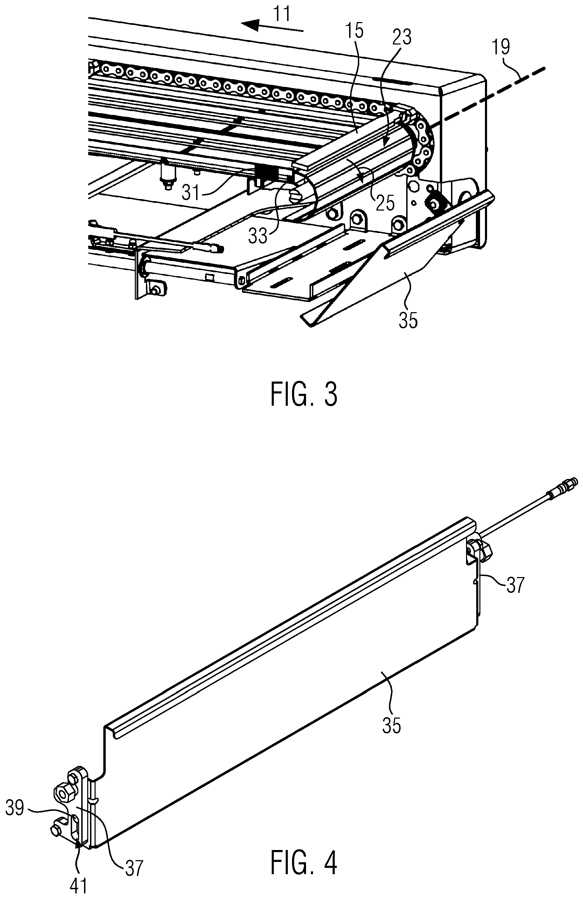

As can best be seen in Figs. 2 and 3, a first protective guard 23 is curved around the return axis 19. In Figs. 2 and 3, the first protective guard 23 is shown in a first protection position. The first protective guard 23 prevents a user from reaching towards the return axis 19 from a certain angular range around the return axis 19. As indicated by arrows 25 in Figs. 2 and 3, the first protective guard 23 may be moved out of the first protection position by rotation about the return axis 19. For example, the first protective guard 23 may be guided for rotation about the return axis 19 in grooves provided in opposing side parts 27 of the machine frame 29 of the packaging machine1 (see Fig. 1).

A hand or another object that moves or is pushed against the first protective guard 23 in a direction opposite to the production direction 11 causes the first protective guard 23 to rotate about the return axis 19. This may prevent the hand or other object from being caught between the first protective guard 23 and the moving part of the packaging machine 1, in particular one of the lateral rods 15.

A first sensor 31 schematically shown in Figs. 2 and 3 detects whether the first protective guard 23 is in the first protection position or not. In the illustrated embodiment, the first sensor 31 is a magnetic sensor detecting whether a magnet 33 that is attached to the first protective guard 23 is in a position corresponding to the first protection position of the first protective guard 23. Alternatively, other types of sensors may be used, such as, for example, radar sensors or sensors based on one or more light barriers.

When the first sensor 31 detects the first protective guard 23 moving out of the first protection position (for example, by detecting that the first protective guard 23 is no longer in the first protection position), the controller 21 shuts down operation of at least the conveyor assembly 9, or more preferably, operation of the entire packaging machine 1, for safety reasons.

In the illustrated embodiment, the packaging machine 1 further comprises an optional second protective guard 35. The second protective guard 35 may comprise a metal sheet extending along the lateral direction at a position upstream of the return axis 19.

Fig. 2 shows a second protective guard 35 in a second protection position.

Fig. 3 shows the second protective guard 35 in a second open position. In the second protection position, the second protective guard 35 covers the return axis 19 with respect to the production direction 11. In the second open position, a distance between the return axis 19 and the second protective guard 35 is increased as compared to the second protection position.

Fig. 4 shows the second protective guard 35 together with two brackets 37. The brackets 37 are provided at opposing lateral sides of the second protective guard 35. The brackets 37 are fixedly attached to the machine frame 29 of the packaging machine 1 at opposing lateral sides of the packaging machine 1. The second protective guard 35 comprises support pins 39 protruding from the second protective guard 35 at opposing lateral ends of the second protective guard 35. Each one of the brackets 37 comprises a vertical slot 41 receiving a corresponding one of the support pins 39. The second protective guard 35 is fixed to the machine frame 29 of the packaging machine 1 via engagement of the support pins 39 in the slots 41.

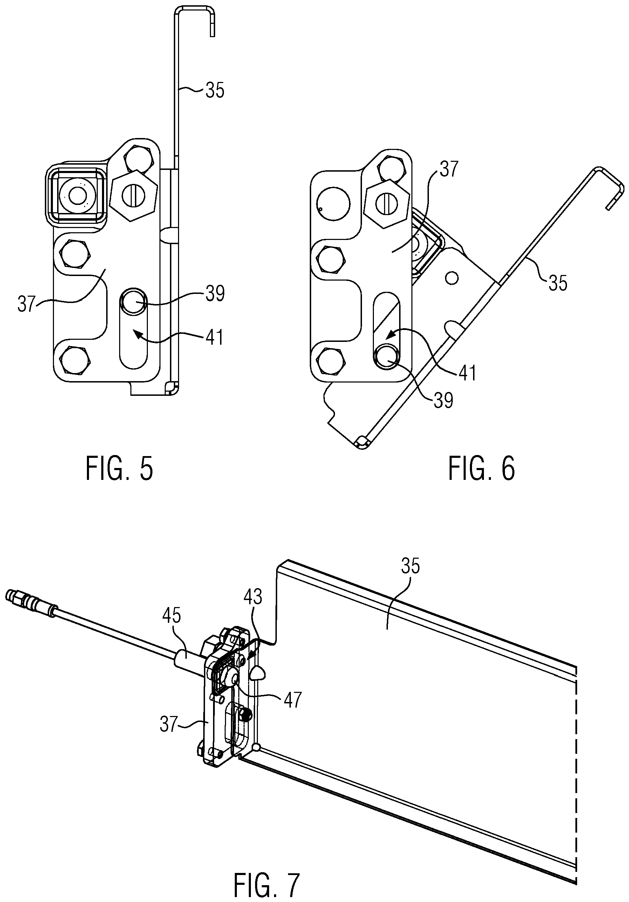

Fig. 5 shows the positioning of the second protective guard 35 with respect to the bracket 37 in the second protection position. In the second protection position, the second protective guard 35 extends essentially vertically. The support pin 39 is provided in an upper position in the slot 41.

Fig. 7 shows a holding assembly 43 applying a holding force between the bracket 37 and the second protective guard 35 to hold the second protective guard 35 in the second protection position. The holding assembly 43 comprises a plunger. The plunger may be provided at the bracket 37 and may engage into a recess or opening in the second protective guard 35. Alternatively, the plunger may be provided at the second protective guard 35 and may reach into a recess or opening in the bracket 37. The holding assembly 43 applies a holding force sufficient to hold the second protective guard 35 in the second protection position during normal operation of the packaging machine 1. However, when a hand or another object is pushed against the second protective guard 35, the holding force applied by the holding assembly 43 may be overcome to move the second protective guard 35 to the second open position.

The second protective guard 35 is moved from the second protection position illustrated in Fig.5 into the second open position illustrated in Fig. 6 by a combination of a translational motion and a rotational motion. Both the rotational motion and the translational motion are enabled by a movement of the support pins 39 in the slots 41 of the brackets 37. To reach the second open position, the support pin 39 slides downward within the slot 41. Further, the second protective guard 35 rotates about an axis defined by the support pin 39, in particular such that an upper section of the second protective guard 35 rotates away from the conveyor assembly 9 or from the return axis 19.

As illustrated in Fig. 7, a second sensor 45 is provided to detect whether the second protective guard 35 is in the second protection position. Preferably, the second sensor 45 comprises a magnetic sensor detecting whether a magnet 47 attached to the second protective guard 35 is present in a position corresponding to the second protection position of the second protective guard 35. Other types of sensors may be employed.

When the second sensor 45 detects the second protective guard 35 moving out of the second protection position (for example, by detecting that the second protective guard 35 is no longer in the second protection position), the controller 21 prevents operation of at least the conveyor assembly 9, or preferably operation of the packaging machine 1 in its entirety, for safety reasons.

The illustrated embodiment shows the first protective guard 23 and the second protective guard 35 at an infeed end of the conveyor assembly 7. Alternatively, one or both of the first protective guard 23 and the second protective guard 35 may be provided, for example, at a downstream end of an outfeed conveyor 49 of the packaging machine 1 (see Fig. 1) or at the infeed end or the outfeed end of any other conveyor of the packaging machine 1.

## Claims

1. Packaging machine (1), comprising:
a controller (21);
a conveyor assembly (9) configured to convey packages along a production direction (11), the conveyor assembly (9) comprising an endless circulation device configured to be redirected about a return axis (19);
**characterized in that** the packaging machine (1) further comprises:
a first protective guard (23) that is curved around the return axis (19) and movably provided in a first protection position, wherein the first protective guard (23) is configured to be rotated about the return axis (19); and
a first sensor (31) configured to detect when the first protective guard (23) moves out of the first protection position, wherein the controller (21) is configured to prevent operation of the conveyor assembly (9) in response to a detection of the first protective guard (23) moving out of the first protection position.

2. Packaging machine according to claim 1, wherein the first protective guard (23) and the return axis (19) are concentric.

3. Packaging machine according to any one of the preceding claims, wherein the first protective guard (23) covers an angle of at least 90 degrees, or at least 100 degrees, or at least 120 degrees, or at least 150 degrees, or at least 180 degrees around the return axis (19).

4. Packaging machine according to any one of the preceding claims, wherein the endless circulation device comprises a first chain (13) configured to circulate on a first lateral side of the packaging machine (1) and a second chain (13) configured to circulate on a second lateral side of the packaging machine (1).

5. Packaging machine according to claim 4, wherein the endless circulation device comprises a plurality of lateral rods (15), wherein each lateral rod (15) comprises a first end fixed to the first chain (13) and a second end fixed to the second chain (13), wherein the lateral rods (15) are configured to be moved by synchronous circulation of the first chain (13) and the second chain (13).

6. Packaging machine according to any one of the preceding claims, wherein the first protective guard (23) comprises a concave surface facing the return axis (19).

7. Packaging machine according to any one of the preceding claims, further comprising a second protective guard (35) movably provided in a second protection position, wherein the second protective guard (35) is configured to be moved by both a translational movement and a rotational movement.

8. Packaging machine according to claim 7, further comprising a holding assembly (43) configured to apply a holding force to the second protective guard (35) that is sufficient to hold the second protective guard (35) in the second protection position during normal operation of the packaging machine (1), but is small enough to allow the second protective guard (35) to be manually moved out of the second protection position.

9. Packaging machine according to claim 7 or 8, further comprising a second sensor (45) configured to detect when the second protective guard (35) moves out of the second protection position, wherein the controller (21) is configured to prevent operation of the conveyor assembly (9) in response to a detection of the second protective guard (35) moving out of the second protection position.

10. Packaging machine according to any one claims 7 to 9, wherein the second protective guard (35) is provided at an infeed end or at an outfeed end of the conveyor assembly (9).

11. Packaging machine according to any one claims 7 to 10, wherein the second protective guard (35) extends essentially vertically in the second protection position.

12. Packaging machine according to any one claims 7 to 11, wherein the second protective guard (35) is moveably supported by engagement of a support pin (39) in a slot (41) to enable the translational movement and the rotational movement of the second protective guard (35).

13. Method for operating a packaging machine (1), comprising:
conveying packages along a production direction (11) with a conveyor assembly (9) comprising an endless circulation device that is redirected about a return axis (19);
**characterized in that** the method further comprises:
protecting access to a protection region of the conveyor assembly (9) with a first protective guard (23), while the first protective guard (23) is in a first protection position, wherein the first protective guard (23) preferably is curved around the return axis (19);
rotating the first protective guard (23) about the return axis (19) out of the first protection position;
detecting a rotation of the first protective guard (23) out of the first protection position with a first sensor (31); and
preventing operation of the conveyor assembly (9) in response to a detection of the rotation of the first protective guard (23) out of the first protection position.

14. Method according to claim 13, wherein the conveyor assembly (9) alternatingly moves in a forward sense and in a rearward sense, wherein the conveyor assembly (9) conveys packages along the production direction (11) when moving in the forward sense and disengages the packages when moving in the rearward sense.

15. Method according to claim 13 or 14, further comprising:
protecting access to the protection region of the conveyor assembly (9) with a second protective guard (35), while the second protective guard (35) is in a second protection position;
moving the second protective guard (35) out of the second protection position by a combination of a rotational movement and a translational movement;
detecting a movement of the second protective guard (35) out of the second protection position with a second sensor (45); and
preventing operation of the conveyor assembly (9) in response to a detection of the movement of the second protective guard (35) out of the second protection position.

## Patentansprüche

1. Verpackungsmaschine (1), die umfasst:
eine Steuerungseinrichtung (21);
eine Förderanordnung (9), die so ausgeführt ist, dass sie Verpackungen in einer Produktionsrichtung (11) befördert, wobei die Förderanordnung (9) eine Endlos-Umlaufvorrichtung umfasst, die so ausgeführt ist, dass sie um eine Rücklaufachse (19) herum umgelenkt wird;
**dadurch gekennzeichnet, dass** die Verpackungsmaschine (1) des Weiteren umfasst:
eine erste Schutzeinrichtung (23), die um die Rücklaufachse (19) gekrümmt ist und an einer ersten Schutzposition beweglich vorgesehen ist, wobei die erste Schutzeinrichtung (23) so ausgeführt ist, dass sie um die Rücklaufachse (19) herum gedreht wird; sowie
einen ersten Sensor (31), der so ausgeführt ist, dass er erfasst, wenn sich die erste Schutzeinrichtung (23) aus der ersten Schutzposition herausbewegt, wobei die Steuerungseinrichtung (21) so ausgeführt ist, dass sie Betrieb der Förderanordnung (9) in Reaktion auf eine Erfassung dahingehend verhindert, dass sich die erste Schutzeinrichtung (23) aus der ersten Schutzposition heraus bewegt.

2. Verpackungsmaschine nach Anspruch 1, wobei die erste Schutzeinrichtung (23) und die Rücklaufachse (19) konzentrisch sind.

3. Verpackungsmaschine nach einem der vorangehenden Ansprüche, wobei die erste Schutzeinrichtung (23) einen Winkel von wenigstens 90°, oder wenigstens 100°, oder wenigstens 120°, oder wenigstens 150° oder wenigstens 180° um die Rücklaufachse (19) herum abdeckt.

4. Verpackungsmaschine nach einem der vorangehenden Ansprüche, wobei die Endlos-Umlaufvorrichtung eine erste Kette (13), die so ausgeführt ist, dass sie auf einer ersten Längsseite der Verpackungsmaschine (1) umläuft, sowie eine zweite Kette (13) umfasst, die so ausgeführt ist, dass sie auf einer zweiten Längsseite der Verpackungsmaschine (1) umläuft.

5. Verpackungsmaschine nach Anspruch 4, wobei die Endlos-Umlaufvorrichtung eine Vielzahl seitlicher Stangen (15) umfasst, jede seitliche Stange (15) ein erstes Ende, das an der ersten Kette (13) befestigt ist, sowie ein zweites Ende umfasst, das an der zweiten Kette (13) befestigt ist, wobei die seitlichen Stangen (15) so ausgeführt sind, dass sie durch synchronen Umlauf der ersten Kette (13) und der zweiten Kette (13) bewegt werden.

6. Verpackungsmaschine nach einem der vorangehenden Ansprüche, wobei die erste Schutzeinrichtung (23) eine konkave Fläche umfasst, die der Rücklaufachse (19) zugewandt ist.

7. Verpackungsmaschine nach einem der vorangehenden Ansprüche, die des Weiteren eine zweite Schutzvorrichtung (35) umfasst, die an einer zweiten Schutzposition vorgesehen beweglich ist, wobei die zweite Schutzvorrichtung (35) so ausgeführt ist, dass sie sowohl durch eine Translationsbewegung als auch durch eine Rotationsbewegung bewegt wird.

8. Verpackungsmaschine nach Anspruch 7, die des Weiteren eine Haltevorrichtung (43) umfasst, die so ausgeführt ist, dass sie eine Haltekraft auf die zweite Schutzeinrichtung (35) ausübt, die ausreicht, um die zweite Schutzeinrichtung (35) bei normalem Betrieb der Verpackungsmaschine (1) an der zweiten Schutzposition zu halten, die jedoch gering genug ist, um zuzulassen, dass die zweite Schutzeinrichtung (35) manuell aus der zweiten Schutzposition heraus bewegt wird.

9. Verpackungsmaschine nach Anspruch 7 oder 8, die des Weiteren einen zweiten Sensor (45) umfasst, der so ausgeführt ist, dass er erfasst, wenn sich die zweite Schutzvorrichtung (35) aus der zweiten Schutzposition herausbewegt, wobei die Steuerungseinrichtung (21) so ausgeführt ist, dass sie löschen Betrieb der Fördereranordnung (9) in Reaktion auf eine Erfassung dahingehend verhindert, dass die Schutzvorrichtung (35) aus der zweiten Schutzposition heraus bewegt wird.

10. Verpackungsmaschine nach einem der Ansprüche 7 bis 9, wobei die zweite Schutzvorrichtung (35) an einem Einlaufende oder an einem Auslaufende der Förderanordnung (9) vorgesehen ist.

11. Verpackungsmaschine nach einem der Ansprüche 7 bis 10, wobei die zweite Schutzeinrichtung (35) sich in der zweiten Schutzposition im Wesentlichen senkrecht erstreckt.

12. Verpackungsmaschine nach einem der Ansprüche 7 bis 11, wobei die zweite Schutzeinrichtung (35) durch Eingriff eines Tragebolzens (39) in einem Schlitz (41) beweglich gelagert ist, um die Translationsbewegung und die Drehbewegung der zweiten Schutzeinrichtung (35) zu ermöglichen.

13. Verfahren zum Betreiben einer Verpackungsmaschine (1), das umfasst:
Fördern von Verpackungen in einer Produktionsrichtung (11) mit einer Förderanordnung (9), die eine endlos-Umlaufvorrichtung umfasst, die um eine Rücklaufachse (19) herum umgelenkt wird;
**dadurch gekennzeichnet, dass** das Verfahren des Weiteren umfasst:
Schützen von Zugang zu einem Schutzbereich der Förderanordnung (9) mit einer ersten Schutzeinrichtung (23), während sich die erste Schutzeinrichtung (23) in einer ersten Schutzposition befindet, wobei die erste Schutzeinrichtung (23) vorzugsweise um die Rücklaufachse (19) herum gekrümmt ist;
Drehen der ersten Schutzeinrichtung (23) um die Rücklaufachse (19) herum aus der ersten Schutzposition;
Erfassen einer Drehung der ersten Schutzeinrichtung (23) aus der ersten Schutzposition mit einem ersten Sensor (31); und
Verhindern von Betrieb der Förderanordnung (9) in Reaktion auf eine Erfassung der Drehung der ersten Schutzeinrichtung (23) aus der ersten Schutzposition heraus.

14. Verfahren nach Anspruch 13, wobei sich die Förderanordnung (9) abwechselnd in einer Vorwärtsrichtung und in einer Rückwärtsrichtung bewegt, wobei die Förderanordnung (9) Packungen in der Produktionsrichtung (11) befördert, wenn sie sich in der Vorwärtsrichtung bewegt, und die Packungen freigibt, wenn sie sich in der Rückwärtsrichtung bewegt.

15. Verfahren nach Anspruch 13 oder 14, die des Weiteren umfasst:
Schützen von Zugang zu dem Schutzbereich der Förderanordnung (9) mit einer zweiten Schutzvorrichtung (35), während sich die zweite Schutzvorrichtung (35) an einer zweiten Schutzposition befindet;
Bewegen des zweiten Schutzgitters (35) aus der zweiten Schutzposition durch eine Kombination aus einer Drehbewegung und einer Translationsbewegung;
Erfassen einer Bewegung der zweiten Schutzeinrichtung (35) aus der zweiten Schutzposition mit einem zweiten Sensor (45); und
Verhindern von Betrieb der Förderanordnung (9) in Reaktion auf eine Erfassung der Bewegung der zweiten Schutzvorrichtung (35) aus der zweiten Schutzposition.

## Revendications

1. Machine d'emballage (1), comprenant :
un dispositif de commande (21) ;
un ensemble convoyeur (9) configuré pour convoyer des emballages le long d'une direction de production (11), l'ensemble convoyeur (9) comprenant un dispositif de circulation sans fin configuré pour être redirigé autour d'un axe de retour (19) ;
**caractérisée en ce que** la machine d'emballage (1) comprend en outre :
une première garde de protection (23) qui est incurvée autour de l'axe de retour (19) et fournie de manière amovible dans une première position de protection, dans laquelle la première garde de protection (23) est configurée pour être tournée autour de l'axe de retour (19) ; et
un premier capteur (31) configuré pour détecter lorsque la première garde de protection (23) se déplace hors de la première position de protection, dans laquelle le dispositif de commande (21) est configuré pour empêcher le fonctionnement de l'ensemble convoyeur (9) en réponse à une détection de la première garde de protection (23) se déplaçant hors de la première position de protection.

2. Machine d'emballage selon la revendication 1, dans laquelle la première garde de protection (23) et l'axe de retour (19) sont concentriques.

3. Machine d'emballage selon l'une quelconque des revendications précédentes, dans laquelle la première garde de protection (23) recouvre un angle d'au moins 90 degrés, ou d'au moins 100 degrés, ou d'au moins 120 degrés, ou d'au moins 150 degrés, ou d'au moins 180 degrés autour de l'axe de retour (19).

4. Machine d'emballage selon l'une quelconque des revendications précédentes, dans laquelle le dispositif de circulation sans fin comprend une première chaîne (13) configurée pour circuler sur un premier côté latéral de la machine d'emballage (1) et une seconde chaîne (13) configurée pour circuler sur un second côté latéral de la machine d'emballage (1).

5. Machine d'emballage selon la revendication 4, dans laquelle le dispositif de circulation sans fin comprend une pluralité de tiges latérales (15), dans laquelle chaque tige latérale (15) comprend une première extrémité fixée à la première chaîne (13) et une seconde extrémité fixée à la seconde chaîne (13), dans laquelle les tiges latérales (15) sont configurées pour être déplacées par une circulation synchrone de la première chaîne (13) et de la seconde chaîne (13).

6. Machine d'emballage selon l'une quelconque des revendications précédentes, dans laquelle la première garde de protection (23) comprend une surface concave faisant face à l'axe de retour (19).

7. Machine d'emballage selon l'une quelconque des revendications précédentes, comprenant en outre une seconde garde de protection (35) pourvue de manière mobile dans une seconde position de protection, dans laquelle la seconde garde de protection (35) est configurée pour être déplacée par à la fois un mouvement de translation et un mouvement de rotation.

8. Machine d'emballage selon la revendication 7, comprenant en outre un ensemble de maintien (43) configuré pour appliquer une force de maintien à la seconde garde de protection (35) qui est suffisante pour maintenir la seconde garde de protection (35) dans la seconde position de protection durant un fonctionnement normal de la machine d'emballage (1), mais est suffisamment petite pour permettre à la seconde garde de protection (35) d'être manuellement déplacée hors de la seconde position de protection.

9. Machine d'emballage selon la revendication 7 ou 8, comprenant en outre un second capteur (45) configuré pour détecter lorsque la seconde garde de protection (35) se déplace hors de la seconde position de protection, dans laquelle le dispositif de commande (21) est configuré pour empêcher un fonctionnement de l'ensemble convoyeur (9) en réponse à une détection de la seconde garde de protection (35) se déplaçant hors de la seconde position de protection.

10. Machine d'emballage selon l'une quelconque des revendications 7 à 9, dans laquelle la seconde garde de protection (35) est prévue au niveau d'une extrémité d'alimentation ou au niveau d'une extrémité d'évacuation de l'ensemble convoyeur (9).

11. Machine d'emballage selon l'une quelconque des revendications 7 à 10, dans laquelle la seconde garde de protection (35) s'étend sensiblement verticalement dans la seconde position de protection.

12. Machine d'emballage selon l'une quelconque des revendications 7 à 11, dans laquelle la seconde garde de protection (35) est supportée de manière mobile par engagement d'une goupille de support (39) dans une fente (41) pour permettre le mouvement de translation et le mouvement de rotation de la seconde garde de protection (35).

13. Procédé de fonctionnement d'une machine d'emballage (1), comprenant :
le transport d'emballages le long d'une direction de production (11) avec un ensemble convoyeur (9) comprenant un dispositif de circulation sans fin qui est redirigé autour d'un axe de retour (19) ;
**caractérisé en ce que** le procédé comprend en outre :
la protection de l'accès à une région de protection de l'ensemble convoyeur (9) avec une première garde de protection (23), tandis que la première garde de protection (23) se trouve dans une première position de protection, dans lequel la première garde de protection (23) préférablement est incurvée autour de l'axe de retour (19) ;
le fait de faire tourner la première garde de protection (23) autour de l'axe de retour (19) hors de la première position de protection ;
le fait de détecter une rotation de la première garde de protection (23) hors de la première position de protection avec un premier capteur (31) ; et
le fait d'empêcher un fonctionnement de l'ensemble convoyeur (9) en réponse à une détection de la rotation de la première garde de protection (23) hors de la première position de protection.

14. Procédé selon la revendication 13, dans lequel l'ensemble convoyeur (9) se déplace alternativement dans un sens vers l'avant et dans un sens vers l'arrière, dans lequel l'ensemble convoyeur (9) transporte des emballages le long de la direction de production (11) lors du déplacement dans le sens vers l'avant et désengage les emballages lors du déplacement dans le sens vers l'arrière.

15. Procédé selon la revendication 13 ou 14, comprenant en outre :
une protection de l'accès à la région de protection de l'ensemble convoyeur (9) avec une seconde garde de protection (35), tandis que la seconde garde de protection (35) se trouve dans une seconde position de protection ;
le déplacement de la seconde garde de protection (35) hors de la seconde position de protection par une combinaison d'un mouvement de rotation et d'un mouvement de translation ;
une détection d'un mouvement de la seconde garde de protection (35) hors de la seconde position de protection avec un second capteur (45) ; et
le fait d'empêcher un fonctionnement de l'ensemble convoyeur (9) en réponse à une détection du mouvement de la seconde garde de protection (35) hors de la seconde position de protection.
